# EUROPEAN PATENT SPECIFICATION

(11) **EP 4 481 733 B1**
(45) Date of publication and mention of the grant of the patent: **11.03.2026**
(21) Application number: 24176776.3
(22) Date of filing: 17.05.2024
(51) Int. Cl.: G10L 21/003, H04N 21/43, G10L 13/00, G10L 15/26, H04N 21/439

(54) **CONTENT SYSTEM WITH SPEECH-RELATED AUDIO CONTENT REPLACEMENT FEATURE**
INHALTSSYSTEM MIT SPRACHBEZOGENER AUDIOINHALTSERSATZFUNKTION
SYSTÈME DE CONTENU AVEC FONCTION DE REMPLACEMENT DE CONTENU AUDIO VOCAL

(30) Priority: 23.06.2023 US 202318340808
(43) Date of publication of application: 25.12.2024
(73) Proprietor: Roku, Inc., San Jose, CA 95110 (US)
(72) Inventor: JETHWA, Ronica, San Jose, 95110 (US); RAMESH, Sunil, San Jose, 95110 (US); CUTTER, Michael, San Jose, 95110 (US); LEVITIAN, Karina, San Jose, 95110 (US)
(74) Representative: Aldridge, Henry Alexander

(56) References cited:
- US-A1- 2016 364 397
- US-A1- 2020 213 680

## Description

### USAGE AND TERMINOLOGY

In this disclosure, unless otherwise specified and/or unless the particular context clearly dictates otherwise, the terms "a" or "an" mean at least one, and the term "the" means the at least one.

### BACKGROUND

US2016/364397 A1 discloses systems, methods and devices which process received media content to generate personalized media presentations on an end point device. Received media content may be buffered in a moving window buffer, and processed to create tokens by parsing a next content element, and, for each content element, identifying a speaker or actor, creating a text representation, and measuring perceptual properties such as pitch, timbre, volume, timing, and frame rate. The end point device may compare a segment of tokens within buffered media content to a list of replacement subject matter within a user profile to determine whether the segment matches any of the replacement subject matter, and identify substitute subject matter for the matched replacement subject matter. The end point device may create a replacement sequence by modifying the substitute subject matter using the perceptual properties of the tokens in the segment, and render a personalized media presentation including the replacement sequence.

### SUMMARY

It is an object of the invention to overcome the shortcomings in the prior art. This object of the invention is solved by the independent claims. Specific embodiments are defined in the dependent claims. Hence, in one aspect, an example method according to claim 1 is disclosed. Optional features are set out in claims 2 to 12.

In another aspect, an example computing system according to claim 13 is disclosed.

In another aspect, an example non-transitory computer-readable medium according to claim 14 is disclosed.

### BRIEF DESCRIPTION OF THE DRAWINGS

Figure 1 is a simplified block diagram of an example content system in which various described principles can be implemented.
Figure 2 is a simplified block diagram of an example computing system in which various described principles can be implemented.
Figure 3 is a simplified block diagram of example mapping data that maps input word(s) to output word(s).
Figure 4 is a flow chart of an example method.
Figure 5 is a flow chart of another example method.

### DETAILED DESCRIPTION

### I. Overview

Given the increasingly large amount of media content (e.g., movies and television shows) that is now available to users, it has become especially important for content providers to provide media content that users find interesting and engaging, so that users will choose that media content over other options. One way to do this is by providing a given user with personalized or otherwise customized media content that is specifically tailored to that user.

In one example, a content system can do this by modifying a portion of media content, namely the portion of the media content that includes audio content representing speech, to make that audio content representing speech more tailored to a specific user. This can be useful in a variety of situations. For example, consider an example in which the media content at issue is a movie that includes audio content representing dialog of the movie, and where the movie is generally aimed at a variety of different types of audiences (e.g., audiences of all ages), except for a portion of that dialog that is adult-oriented (e.g., where the dialog includes words that are complex or sophisticated, or that includes profanity, etc.) and where the person watching the movie is an adult. In this example, since the person watching the movie is an adult, it may be appropriate to simply present the media content with the audio content representing speech as is.

However, consider another example that is the same as the one described above, except that the person watching the movie is a child. In this scenario, it may be desirable to present a modified version of the movie, namely one where at least a portion of the audio content representing speech is modified such that it is more suitable for the child. To allow for this, in one example, the content system can replace at least a portion of the audio content representing speech with replacement audio content representing speech, where that replacement audio content representing speech includes at least some replacement words, so as to avoid having it include words that are complex or sophisticated, that include profanity, etc. In this way, the content system can generate modified audio content representing speech, and therefore modified media content that includes that modified audio content, that is more tailored to the child.

The situation described above is just one example where modifying audio content can be useful. In practice, there could be lots of other situations where it may be desirable to modify audio content in this way or in a similar way. For example, consider a situation where for given media content, the included audio content representing speech is in a first language, but the user has a language preference and prefers audio content in a second language rather than the first language. In this case, it may be desirable to replace the audio content representing speech with replacement audio content representing speech, where in the replacement audio content, the speech is in the second language, rather than the first.

In one aspect, the content system can provide desired outcomes in the context of these and other example situations by (i) obtaining media content; (ii) extracting from the obtained media content, audio content representing speech; (iii) using the extracted audio content representing speech as a basis to generate corresponding speech text; (iv) replacing one or more words of the generated speech text with one or more corresponding replacement words, thereby generating modified speech text; (v) using the modified speech text as a basis to generate corresponding replacement audio content representing the modified speech; (vi) in the obtained media content, replacing the audio content representing speech with the generated replacement audio content representing speech, thereby generating modified media content; and (vii) outputting for presentation the generated modified media content. These and related operations and features will now be described in greater detail.

### II. Example Architecture

### A. Content System

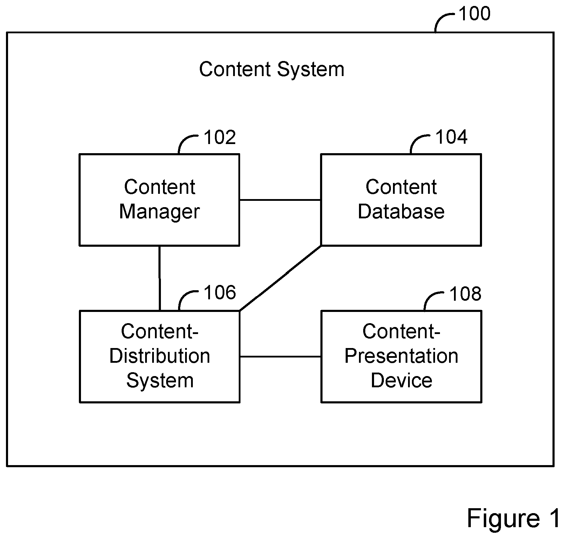

Figure 1 is a simplified block diagram of an example content system 100. Generally, the content system 100 can perform operations related to various types of content, such as media content, which can take the form of video content and/or audio content. As such, the media content can include a video content component and/or an audio content component. For context, there can be various types of media content. For example, media content can be or include a movie, a television show, or a commercial, or a portion or combination thereof, among numerous other possibilities.

Media content can be represented by media data, which can be generated, stored, and/or organized in various ways and according to various formats and/or protocols, using any related techniques now know or later discovered. For example, the media content can be generated by using a camera, a microphone, and/or other equipment to capture or record a live-action event. In other example, the media content can be synthetically generated, such as by using one or more of the techniques described in this disclosure, or by using any related media content generation techniques now know or later discovered.

As noted above, media data can also be stored and/or organized in various ways. For example, the media data can be stored and organized as a Multimedia Database Management System (MDMS) and/or in various digital file formats, such as the MPEG-4 format, among numerous other possibilities.

The media data can represent the media content by specifying various properties of the media content, such as video properties (e.g., luminance, brightness, and/or chrominance values), audio properties, and/or derivatives thereof. In some instances, the media data can be used to generate the represented media content. But in other instances, the media data can be a fingerprint or signature of the media content, which represents the media content and/or certain characteristics of the media content and which can be used for various purposes (e.g., to identify the media content or characteristics thereof), but which is not sufficient at least on its own to generate the represented media content.

In some instances, media content can include metadata associated with the video and/or audio content. In the case where the media content includes video content and audio content, the audio content is generally intended to be presented in sync together with the video content. To help facilitate this, the media data can include metadata that associates portions of the video content with corresponding portions of the audio content. For example, the metadata can associate a given frame or frames of video content with a corresponding portion of audio content. In some cases, audio content can be organized into one or more different channels or tracks, each of which can be selectively turned on or off, or otherwise controlled.

In some instances, media content can be made up one or more segments. For example, in the case where the media content is a movie, the media content may be made up of multiple segments, each representing a scene (or perhaps multiple scenes) of the movie. As another example, in the case where the media content is a television show, the media content may be made up of multiple segments, each representing a different act (or perhaps multiple acts) of the show. In various examples, a segment can be a smaller or larger portion of the media content. For instance, a segment can be a portion of one scene, or a portion of one act. Or a segment can be multiple scenes or multiple acts, or various portions thereof.

Returning back to the content system 100, this can include various components, such as a content manager 102, a content database 104, a content-distribution system 106, and a content-presentation device 108. The content system 100 can also include one or more connection mechanisms that connect various components within the content system 100. For example, the content system 100 can include the connection mechanisms represented by lines connecting components of the content system 100, as shown in Figure 1.

In this disclosure, the term "connection mechanism" means a mechanism that connects and facilitates communication between two or more components, devices, systems, or other entities. A connection mechanism can be or include a relatively simple mechanism, such as a cable or system bus, and/or a relatively complex mechanism, such as a packet-based communication network (e.g., the Internet). In some instances, a connection mechanism can be or include a non-tangible medium, such as in the case where the connection is at least partially wireless. In this disclosure, a connection can be a direct connection or an indirect connection, the latter being a connection that passes through and/or traverses one or more entities, such as a router, switcher, or other network device. Likewise, in this disclosure, a communication (e.g., a transmission or receipt of data) can be a direct or indirect communication.

In some instances, the content system 100 can include multiple instances of at least some of the described components. The content system 100 and/or components thereof can take the form of a computing system, an example of which is described below.

### B. Computing System

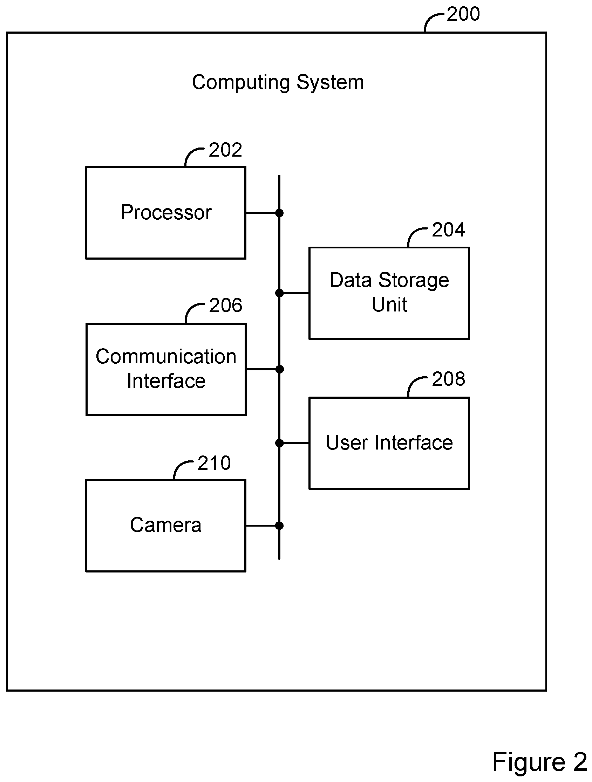

Figure 2 is a simplified block diagram of an example computing system 200. The computing system 200 can be configured to perform and/or can perform various operations, such as the operations described in this disclosure. The computing system 200 can include various components, such as a processor 202, a data storage unit 204, a communication interface 206, a user interface 208, and/or a camera 210.

The processor 202 can be or include a general-purpose processor (e.g., a microprocessor) and/or a special-purpose processor (e.g., a digital signal processor). The processor 202 can execute program instructions included in the data storage unit 204 as described below.

The data storage unit 204 can be or include one or more volatile, nonvolatile, removable, and/or non-removable storage components, such as magnetic, optical, and/or flash storage, and/or can be integrated in whole or in part with the processor 202. Further, the data storage unit 204 can be or include a non-transitory computer-readable storage medium, having stored thereon program instructions (e.g., compiled or non-compiled program logic and/or machine code) that, upon execution by the processor 202, cause the computing system 200 and/or another computing system to perform one or more operations, such as the operations described in this disclosure. These program instructions can define, and/or be part of, a discrete software application.

In some instances, the computing system 200 can execute program instructions in response to receiving an input, such as an input received via the communication interface 206 and/or the user interface 208. The data storage unit 204 can also store other data, such as any of the data described in this disclosure.

The communication interface 206 can allow the computing system 200 to connect with and/or communicate with another entity according to one or more protocols. Therefore, the computing system 200 can transmit data to, and/or receive data from, one or more other entities according to one or more protocols. In one example, the communication interface 206 can be or include a wired interface, such as an Ethernet interface or a High-Definition Multimedia Interface (HDMI). In another example, the communication interface 206 can be or include a wireless interface, such as a cellular or WI-FI interface.

The user interface 208 can allow for interaction between the computing system 200 and a user of the computing system 200. As such, the user interface 208 can be or include an input component such as a keyboard, a mouse, a remote controller, a microphone, and/or a touch-sensitive panel. The user interface 208 can also be or include an output component such as a display device (which, for example, can be combined with a touch-sensitive panel) and/or a sound speaker.

The camera 210 can be any time of camera (e.g., a webcam) configured to capture image and/or video content data.

The computing system 200 can also include one or more connection mechanisms that connect various components within the computing system 200. For example, the computing system 200 can include the connection mechanisms represented by lines that connect components of the computing system 200, as shown in Figure 2.

The computing system 200 can include one or more of the above-described components and can be configured or arranged in various ways. For example, the computing system 200 can be configured as a server and/or a client (or perhaps a cluster of servers and/or a cluster of clients) operating in one or more server-client type arrangements, such as a partially or fully cloud-based arrangement, for instance.

As noted above, the content system 100 and/or components of the content system 100 can take the form of a computing system, such as the computing system 200. In some cases, some or all of these entities can take the form of a more specific type of computing system, such as a desktop or workstation computer, a laptop, a tablet, a mobile phone, a television, a set-top box, a streaming media device, and/or a head-mountable display device (e.g., virtual-reality headset or an augmented-reality headset), among numerous other possibilities.

### III. Example Operations

The content system 100, the computing system 200, and/or components of either can be configured to perform and/or can perform various operations. As noted above, the content system 100 can perform operations related to media content. But the content system 100 can also perform other operations. Various example operations that the content system 100 can perform, and related features, will now be described with reference to select figures.

### A. Speech-Based Audio Content Replacement

As noted above, the content system 100 can perform operations related to speech-based audio content replacement. In one aspect, this can involve the content system 100 (i) obtaining media content; (ii) extracting from the obtained media content, audio content representing speech; (iii) using the extracted audio content representing speech as a basis to generate corresponding speech text; (iv) replacing one or more words of the generated speech text with one or more corresponding replacement words, thereby generating modified speech text; (v) using the modified speech text as a basis to generate corresponding replacement audio content representing the modified speech; (vi) in the obtained media content, replacing the audio content representing speech with the generated replacement audio content representing speech, thereby generating modified media content; and (vii) outputting for presentation the generated modified media content. These and related operations will now be described in greater detail.

### 1. Obtaining Media Content

To begin, the content manager 102 can obtain media content, which can include a video content component and an audio content component. For example, the media content can be a movie that includes a video content component and an audio content component, which itself may include different types of audio content, such as dialog or other speech, along with one or more non-speech components, such as background music and/or sound effects, among numerous other possibilities. In another example, the obtained media content could be just a segment or some other portion of that movie.

In one example, the content manager 102 can obtain media content by selecting media content based on input received from a user via a user interface, and then obtaining the selected media content. In another example, the content manager 102 can do this by automatically selecting media content based on one or more predefined rules, and then obtaining the selected media content. The content manager 102 can then obtain the selected media content in various ways, such as by retrieving from a media content database such as the content database 104, media data representing the selected media content.

### 2. Extracting Audio Content Representing Speech

The content manager 102 can then extract from the obtained media content, audio content representing speech. In some instances, the audio content representing speech can be a separate audio track within the audio content component, or it can be a portion of the audio content component that is tagged such the audio content representing speech can be isolated from any remaining audio content included in the media content.

In other examples, the content system 100 can isolate and/or extract the audio content representing speech from other audio content by employing any speech isolation and/or extraction technique now known or later discovered. Example techniques include those describe in KR Pat. App. Pub. No. 20080002291 entitled "Voice deleting device and method from original sound" and US Pat. App. Pub. No. 2020/0084521 entitled "Automatic personal identifiable information removal from audio."

The extracted audio content can be stored in various ways (e.g., as audio data representing the audio content, stored in an audio file format), as with any audio content. By extracting the audio content representing speech, the content system 100 can then perform one or more operations in connection with that extracted portion, examples of which will be described below.

### 3. Using the Extracted Audio Content Representing Speech as a Basis to Generate Corresponding Speech Text

Next, the content manager 102 can use the extracted audio content representing speech as a basis to generate corresponding speech text. The content manager 102 can do this in various ways. For example, the content manager 102 can use a speech-to-text (STT) module that employs techniques that include or are based on linear predictive coding (LPC), mel-frequency cestrum co-efficient (MFCC), dynamic time wrapping, and/or a hidden markov model (HMM). In using a SST module, the content manager 102 can provide the audio content representing speech to the SST as input, which the SST module can use to generate corresponding speech text. As such, the content manager 102 can responsively receive from the SST module, corresponding speech text as output. The content manager 102 can store the generated text in various ways, such as by storing representative text data as a text file in a database, for instance.

In this way, the content manager 102 can have access to text representing the speech of the media content. For example, in the case where the media content is an action movie, the content manager 102 can have access to a text-based transcription of at least a portion of the dialog of that movie. In some cases, the SST module can add metadata to the generated text. For example, the SST module can add metadata that maps portions of the text to corresponding portions of the media content, by way of using time stamps, time offsets, frame identifiers, etc. With this information, a given portion of text can be linked with a corresponding portion of the audio content and/or the media content.

### 4. Replacing Words of the Generated Speech Text with Replacement Words, to Generate Modified Speech Text

Next, the content manager 102 can replace one or more words of the generated speech text with one or more corresponding replacement words, thereby generating modified speech text.

As one example, the content manager 102 can replace one or more words of the generated speech text that are adult-oriented (e.g., where the dialog includes words that are complex or sophisticated, or that includes profanity, etc.) with corresponding replacement words that are more child friendly (e.g., with words that are more simplistic and that do not include profanity, etc.).

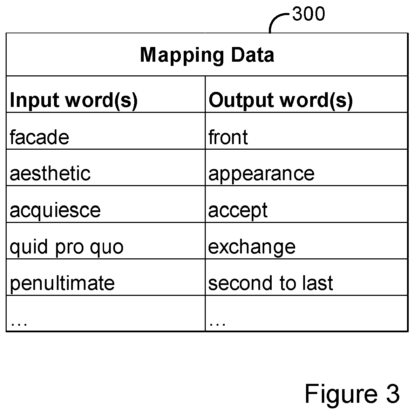

The content manager 102 can do this in various ways. For example, the content manager 102 can do this by using mapping data to map at least the one or more words of the generated speech text to the one or more replacement words (i.e., mapping one or more input words to one or more output words). For example, the mapping data could specify that "facade" maps to "front," that "aesthetic" maps to "appearance," that "acquiesce" maps to "accept," that "quid pro quo" maps to "exchange," and that "penultimate" maps to "second to last," as just a few examples. As illustrated with some of these examples, in some cases, the input or output word(s) can include one word or multiple words (i.e., phrases). Figure 3 shows example mapping data 300 with each row representing an example mapping data set, in line with the examples above.

For the sake of clarity, these are just a few illustrative examples of mapping data sets. In practice, it is likely that the mapping data will include large amounts of mapping data - perhaps thousands of mapping data sets or more. Mapping data can be generated in various ways, including by being manually assembled. However, in some cases, the one or more tools or techniques, including any data gathering or organization techniques now known or later discovered, can be used to help automate or at least partially automate the process of assembling mapping data. For example, one or more automated techniques could be used to generate mapping data of this type from sources such as one or more dictionaries, thesauruses, etc.

The mapping data can vary to suit a desired configuration. For example, in a scenario where the goal is to modify audio content representing speech text so that it becomes more child friendly, mapping data like the example mapping data 300 may be appropriate. However, in another example, such as where the goal is to modify mapping data representing speech to change the language of the speech, it may be appropriate to have different mapping data (perhaps generated based on one or more translation references). For instance, in that case, it may be appropriate to have mapping data that maps a given word in a first language to that same word, but in a different, second language. Other example use cases (and therefore types of mapping data) are possible as well depending on the nature of the media/audio content and the type of modification that is sought to be made.

As noted above, by using the mapping data, the content manager 102 can replace one or more words of the generated speech text with one or more corresponding replacement words, thereby generating modified speech text. For instance, as a very simplistic example where it is desirable to map from text that is adult-oriented to text that is more child friendly, by using the above described example mapping data 300, the content manager 102 can use the text "the facade of that building has a beautiful aesthetic" to generate the replacement text "the front of that building has a beautiful appearance." This can allow the content manager 102 to then replace the former text with the latter text.

In some examples, the content manager 102 can determine user profile data associated with a viewer of the media content, which the content manager 102 can use as a basis to select mapping data to be used for this purpose. Additionally or alternatively, the content manager 102 can use the user profile data together with the one or more words of the generated speech text as a basis to select the one or more replacement words. In one example, the mapping data can reflect this, such as by having a given set of input word(s) together with certain user profile data, map to one or more replacement words. In this way, the content manager 102 can use user profile data, such as data that specifies age-related information about the viewer, together with one or more words of the generated speech text to map to one or more replacement words. As a result, a given word may be mapped to a first replacement word if the viewer is within first age range, whereas the word may be mapped to a different second replacement word if the viewer is within a second age range.

As noted above, the mapping data can vary to suit a desired configuration. In some instances, the content manager 102 can set a configuration based on user input received via a user interface (e.g., received from a user of the content manager 102, or received from the content-presentation device 108, which itself can receive the user input from a user of the content-presentation device 108). In some examples, a user can select a mode for viewing media content. For instance, a user could select a PG-13 mode, which could cause the content manager 102 to modify media content that is not PG-13 compliant, to be PG-13 compliant. In some examples, the mode can apply to a given instance of media content (e.g., to a given movie), to all media content, or to some portion of media content, perhaps based on which user or users are watching the media content or based on other factors. For example, the mode could apply to all media content being watched by a given user, or perhaps more specifically, to all media content being watched by that user when a child is also present, for instance. Various other example configurations and use cases are possible as well.

**In** the case where the content manager 102, the content-presentation device 108, or another device may need to identify a given user and/or given user characteristics, so as to determine corresponding configuration settings (such as in connection with the examples discussed above), the device can do so using any user identification or user characteristic identification techniques now known or later discovered. For example, the device could employ facial recognition techniques or voice recognition techniques for this purpose, among numerous other possibilities. In other examples, the device could identify the user or user characteristics based on input provided by a user, such as by way of a remote control, voice command, etc. The same or similar types of inputs could likewise be provided by the user to make selections and the like in connection with setting a given configuration, such as in connection with the various examples described above.

According to the invention, the content manager 102 determines a speaking duration of the one or more words of the generated speech text, which the content manager 102 uses as a basis to select mapping data to be used as outlined above. Additionally or alternatively, the content manager 102 can use the determine speaking duration of the one or more words of the generated speech text together with the one or more words of the generated speech text as a basis to select the one or more replacement words. In one example, the mapping data can reflect this, such as by having a given set of input word(s) and the determined speaking duration of the same, map to one or more replacement words. This helps to ensure that when the content manager 102 selects a given replacement word or words, it can consider how long the speaker takes to speak the word or words, which in turn may help inform the decision about which replacement word or words to select. Indeed, in the case where the speaker speaks a word slowly, that might be an opportunity to select replacement text that includes multiple words and/or longer words, as that may result in a more seamless (less noticeable) replacement of speech, in some examples. This can allow for even greater detail and granularity within the mapping data. For example, a given word may be mapped to a first replacement set of words if the determined duration is within first duration range, whereas the word may be mapped to a different second replacement set of words if the determined duration is within a second duration range.

Notably, the mapping data can include some or all of the above-described fields, in various combinations to suit a desired use case. Similarly, the mapping data can include additional fields and/or can be organized/arranged in a different way, as needed to suit a desired configuration.

Although the content manager 102 can replace one or more words of the generated speech text with one or more corresponding replacement words using mapping data, the content manager 102 can do this in other ways as well. For example, the content manager 102 can do this by employing a machine learning technique, such as one that uses a deep neural network (DNN) to train a model to use a runtime input-data set that includes one or more words of the generated speech text and/or the determined user profile data, the determined durations, etc. to generate a runtime output-data set that includes the one or more replacement words.

Notably though, before the content manager 102 uses a model to analyze a runtime input-data set to generate a runtime output-data set, the content manager 102 can first train the model by providing it with training input-data sets and training output-data sets. Each of the training input-data sets can include one or more words of the generated speech text and/or the determined user profile data, the determined durations, etc., and each of the training output-data sets can include one or more replacement words.

In one example, these training input and output data-sets can parallel the example data noted above in connection with the mapping data example. In the same way, in practice, it is likely that large amounts of training data - perhaps thousands of training data sets or more - would be used to train the model as this generally helps improve the usefulness of the model.

Training data can be generated in various ways, including by being manually assembled. However, in some cases, the one or more tools or techniques, including any training data gathering or organization techniques now known or later discovered, can be used to help automate or at least partially automate the process of assembling training data and/or training the model.

After the model is trained, the content manager 102 can then provide to the model runtime input data, which the model can use to generate runtime output data. Among other things, this can help ensure that context of the input data serves as a factor in generating the output data. For example, in the case where the input data includes one or more words to be replaced, the input data can also include other nearby text that gives context to those words to be replaced that otherwise may be susceptible to multiple meanings. Based on this input data, the model can generate output data that takes that context into account, thereby generating more accurate and useful output data. Generally, the runtime input data is of the same type as the training input data as described above.

As noted above, a given portion of the generated speech text can be linked with a corresponding portion of the audio content and/or the media content. In some instances, the content manager 102 can carry this association through to the corresponding one or replacement words (and any audio content generated based on those replacement words, as described below). In this way, the one or more replacement words and/or generated audio content can include metadata that provides links to corresponding portions of the media content, by way of using time stamps, time offsets, frame identifiers, etc.

### 5. Using the Modified Speech Text as a Basis to Generate Replacement Audio Content

Next, the content manager 102 can use the modified speech text as a basis to generate corresponding replacement audio content representing the modified speech. The content manager 102 can do this in various ways. For example, the content manager 102 can use a text-to-speech (TTS) module to do this. For example, the TTS module can employ techniques that include or are based on rule based machine translation (RBMT), statistical machine translation (SMT), and/or a hidden markov model (HMM). In using a TTS module, the content manager 102 can provide the modified speech text to the TTS as input, which the TTS module can use to generate corresponding replacement audio content representing the modified speech. As such, the content manager 102 can responsively receive from the TTS module, corresponding replacement audio content representing the modified speech as output. The content manager 102 can store the replacement audio content in various ways, such as by storing replacement audio content data as a file in a database, such as the content database 104 for instance.

In some examples, the STT and TTS models can be inverses of each other and can use one or more of the same or similar inputs/outputs and/or configuration settings. In some cases, the content manager 102 can use additional output data (aside from the text output) received from the STT module as additional input data (aside from the text input) into the TTS model, to help ensure consistency between the extracted audio content representing speech and the replacement audio content representing speech. For instance, the output of the STT model can include data that specifies a narration voice style, pitch settings, etc., which can be received as output from the STT module and used as input in the TTS model. However, in other cases, this data can be modified and/or other data can be used as an input to the STT model. For example, such input to the STT model can be derived from other data, such as user profile and/or user preference data. In this way, the STT model can generate audio content that has characteristics (e.g., narration voice style) that are in line and/or selected based on a given user's profile, user preferences, etc.

### 6. Replacing the Audio Content Representing Speech with the Generated Replacement Audio Content, to Generate Modified Media Content

Next, the content manager 102 can, in the obtained media content, replace the audio content representing speech with the generated replacement audio content representing speech, thereby generating modified media content. The content manager 102 can do this in various ways, such as by using any audio content replacement techniques now known or later discovered, including for example, an Automated Dialogue Replacement (ADR) technique. In one example, in the case where the audio content representing speech is stored as a separate track, the content manager 102 can do so by replacing the existing track, with a new track that includes the replacement audio content representing speech. In another example, the previously described act of extracting the audio content representing speech can involve not only isolating the audio content, but also removing it. The content manager 102 can then combine any remaining audio content (i.e., that includes non-speech components) with the generated replacement audio content, such as by employing any audio adding/summing technique now known or later discovered.

As noted above, portions of the generated replacement audio content can be linked with corresponding portions of the original audio/media content, such as by way of using time stamps, time offsets, frame identifiers, etc. With this information, the content manager 102 can help ensure that the generated replacement audio content can be fit/synchronized with the audio/media content such that the replacement speech aligns with the corresponding video content component of the media content. As such, the content manager 102 can position the replacement audio content so that the speech of the replacement audio content is temporally positioned in a way that adheres to the original positioning of the original speech. In cases where the replacement speech is shorter or longer in duration, the content manager 102 can apply one or more rules to help adjust and/or blend the audio content in a way that eliminates or at least minimizes synchronization issues (e.g., for example, by aligning the replacement speech such that the center point of a portion of the replacement speech aligns with the center point of a corresponding portion of the original speech). This can be done on a word-by-word level, a phrase-by-phrase level, etc. as desired. Among other things, this can help ensure that, even if the replacement speech does not align with the media content perfectly, any discrepancies in timing, alignment, etc. will be minimal, such that they would be unlikely to be noticed by an end user.

### 7. Outputting the Generated Modified Media Content

Next, the content manager 102 can output the generated modified media content for presentation. The content manager 102 can do this in various ways. In one example, this can include the content-distribution system 106 transmitting the generated media to the content-presentation device 108, which can receive and itself output for presentation the generated media content, such that it can be viewed by a user.

The content-distribution system 106 can transmit media content on one or more channels (sometimes referred to as stations or feeds). As such, the content-distribution system 106 can be associated with a single channel content distributor or a multi-channel content distributor such as a multi-channel video program distributor (MVPD).

The content-distribution system 106 and its means of transmission of media content on the channel to the content-presentation device 108 can take various forms. By way of example, the content-distribution system 106 can be or include a cable-television head-end that is associated with a cable-television provider and that transmits the media content on the channel to the content-presentation device 108 through hybrid fiber/coaxial cable connections. As another example, the content-distribution system 106 can be or include a satellite-television head-end that is associated with a satellite-television provider and that transmits the media content on the channel to the content-presentation device 108 through a satellite transmission. As yet another example, the content-distribution system 106 can be or include a television-broadcast station that is associated with a television-broadcast provider and that transmits the content on the channel through a terrestrial over-the-air interface to the content-presentation device 108. And as yet another example, the content-distribution system 106 can be an Internet-based distribution system that transmits the media content using a media content streaming-characteristic service or the like to the content-presentation device 108.

In these and other examples, the content-distribution system 106 can transmit the content in the form of an analog or digital broadcast stream representing the media content.

The content-presentation device 108 can receive media content from one or more entities, such as the content-distribution system 106. In one example, the content-presentation device 108 can select (e.g., by tuning to) a channel from among multiple available channels, perhaps based on input received via a user interface, such that the content-presentation device 108 can receive media content on the selected channel.

In some examples, the content-distribution system 106 can transmit media content to the content-presentation device 108, which the content-presentation device 108 can receive. The content-presentation device 108 can also output media content for presentation. As noted above, the content-presentation device 108 can take various forms. In one example, in the case where the content-presentation device 108 is a television (perhaps with an integrated set-top box and/or streaming media device), outputting the media content for presentation can involve the television outputting the media content via a user interface (e.g., a display device and/or a sound speaker), such that it can be presented to an end-user. As another example, in the case where the content-presentation device 108 is a set-top box or a streaming media device, outputting the media content for presentation can involve the set-top box or the streaming media stick outputting the media content via a communication interface (e.g., an HDMI interface), such that it can be received by a television and in turn output by the television for presentation to an end-user.

As such, in various scenarios, the content-distribution system 106 can transmit media content to the content-presentation device 108, which can receive and output the media content for presentation to an end-user.

### 8. Editing System

In some instances, the content system 100 can include an editing system component that allows a user to review, approve, reject, and/or edit various operations or results of operations, as part of a quality assurance process. For instance, in the context of the content manager 102 replacing one or more words of the generated speech text with one or more corresponding replacement words, thereby generating modified speech text, the editing system can provide suggested word replacements that allows a user of the editing system to review and approve (perhaps with some user input/editing) those word replacements. Additionally or alternatively, in the context of the content manager 102 replacing the audio content representing speech with the generated replacement audio content representing speech, thereby generating modified media content, the editing system can allow the user to review and approve (perhaps with some user input/editing) how the replacement audio content is temporally positioned with respect to the corresponding video content. Notably, such a user interfacing with the editing system could be an end-user, or perhaps a user tasked with producing/editing media content so that it can be provided to an end-user, for example.

### 9. Example Methods

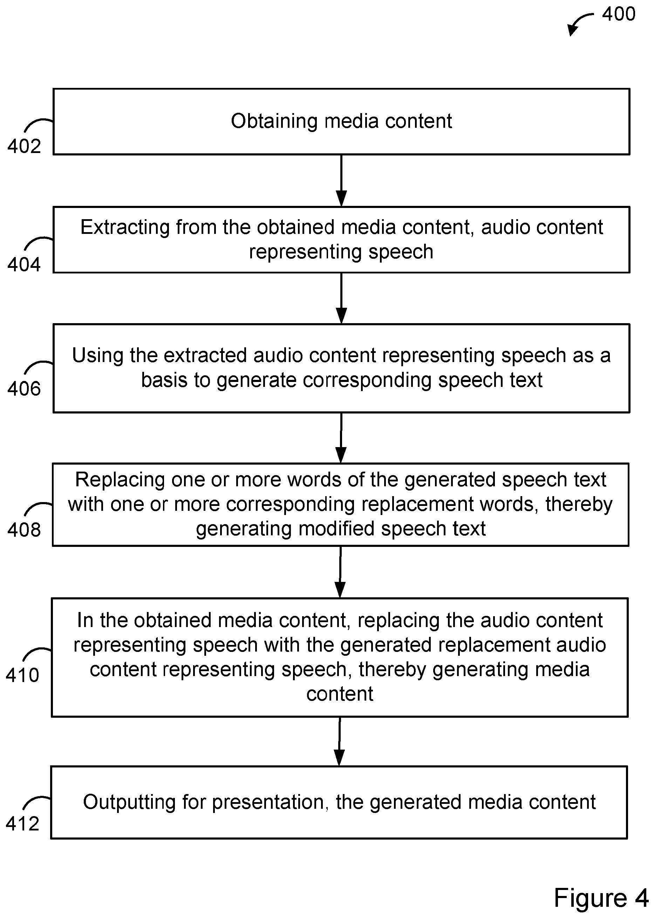

Figure 4 is a flow chart illustrating an example method 400. The method 400 can be carried out by a content system, such as the content system 100, or more generally, by a computing system, such as the computing system 200. At block 402, the method 400 includes obtaining media content. At block 404, the method 400 includes extracting from the obtained media content, audio content representing speech. At block 406, the method 400 includes using the extracted audio content representing speech as a basis to generate corresponding speech text. At block 408, the method 400 includes replacing one or more words of the generated speech text with one or more corresponding replacement words, thereby generating modified speech text. At block 410, the method 400 includes using the modified speech text as a basis to generate corresponding replacement audio content representing the modified speech. At block 412, the method 400 includes in the obtained media content, replacing the audio content representing speech with the generated replacement audio content representing speech, thereby generating modified media content. At block 414, the method 400 includes outputting for presentation the generated modified media content.

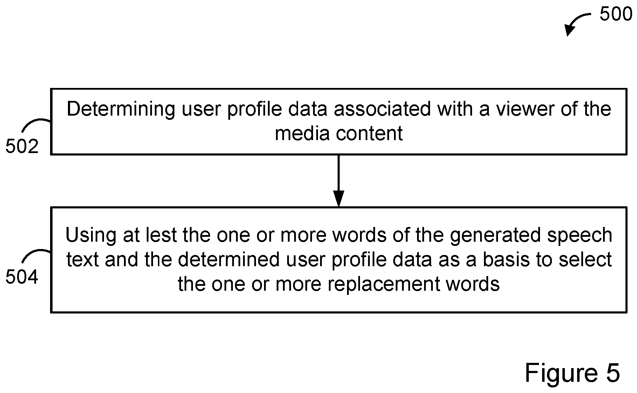

Figure 5 is a flow chart illustrating an example method 500. The method 500 can be carried out by a content system, such as the content system 100, or more generally, by a computing system, such as the computing system 200. The method 500 can be a technique for replacing one or more words of the generated speech text with one or more corresponding replacement words, thereby generating modified speech text. At block 502, the method 500 includes determining user profile data associated with a viewer of the media content. And at block 502, the method 500 includes using at least the one or more words of the generated speech text and the determined user profile data as a basis to select the one or more replacement words.

### B. Other Techniques for Modifying Media Content

As discussed above, the content system 100 can perform various operations related media content modification by way of speech-based audio content replacement. However, the content system 100 can modify media content in other ways as well. As such, the content system 100 can also perform other operations related to modifying media content.

In one example, these operations can relate to the content system 100 using a camera to detect a reference art style, and modifying obtained media content based on that reference art style. More specifically, the content system 100 can use a camera to capture content with a given reference art style. For example, the camera can capture an image in a comic book with a given art style. The content system 100 can then detect the art style of the captured image. The content system 100 can then use the detected art style to select an appropriate filter or content modification template (from among a set of candidate filters/templates) and can modify the obtained media content based on that selected style/template. The content system 100 can perform some or all of these operations in various ways, such as by using one or more appropriate machine-leaning models or any applicable techniques now known or later discovered. With this technique, the content system 100 can present the user with a modified version of obtained media content, where that modification is based on a specific art style provided to the content system 100 by the user.

In another example, the content system 100 can modify media content by using one or more characteristics of a user (e.g., characteristics of the user's face and/or voice) to personalize/customize the media content for that specific user. More specifically, the content system 100 can determine one or more user characteristics, such as by using a camera to capture a user's face or by using a microphone to capture a user's voice, and then deriving user characteristics (e.g., facial features or voice features) from that captured information. The content system 100 can then use the determined user characteristics to modify obtained media content in a way that personalizes/customizes the media content for that specific user. For example, this can involve the content system 100 performing a face-swap technique to replace the face of a character in the media content with the face of the user. As another example, this can involve performing a voice-swap technique to replace the voice of a character in the media content with the voice of the user. The content system 100 can perform some or all of these operations in various ways, such as by using one or more appropriate machine-leaning models or any applicable techniques now known or later discovered. In this way, the content system 100 can present the user with a modified version of obtained media content, where that modification is based on one or more user-specific characteristics.

### IV. Example Variations

Although some of the acts and/or functions described in this disclosure have been described as being performed by a particular entity, the acts and/or functions can be performed by any entity, such as those entities described in this disclosure. Further, although the acts and/or functions have been recited in a particular order, the acts and/or functions need not be performed in the order recited. However, in some instances, it can be desired to perform the acts and/or functions in the order recited. Further, each of the acts and/or functions can be performed responsive to one or more of the other acts and/or functions. Also, not all of the acts and/or functions need to be performed to achieve one or more of the benefits provided by this disclosure, and therefore not all of the acts and/or functions are required.

Although certain variations have been discussed in connection with one or more examples of this disclosure, these variations can also be applied to all of the other examples of this disclosure as well.

Although select examples of this disclosure have been described, alterations and permutations of these examples will be apparent to those of ordinary skill in the art. Other changes, substitutions, and/or alterations are also possible without departing from the invention in its broader aspects as set forth in the following claims.

## Claims

1. A method comprising:
obtaining (402) media content;
extracting (404) from the obtained media content, audio content representing speech, wherein the speech is speech of a speaker;
using (406) the extracted audio content representing speech as a basis to generate corresponding speech text;
replacing (408) one or more words of the generated speech text with one or more corresponding replacement words, thereby generating modified speech text, wherein replacing one or more words of the generated speech text with one or more corresponding replacement words, thereby generating modified speech text comprises: (i) determining the speaker's speaking duration of the one or more words of the generated speech text; and (ii) using at least the one or more words of the generated speech text and the determined speaker's speaking duration of the one or more words of the generated speech text as a basis to select the one or more replacement words;
using the modified speech text as a basis to generate corresponding replacement audio content representing the modified speech;
in the obtained media content, replacing (410) the audio content representing speech with the generated replacement audio content representing speech, thereby generating modified media content; and
outputting (412) for presentation the generated modified media content.

2. The method of claim 1, wherein the media content includes (i) a video content component and (ii) an audio content component, and wherein the audio content component includes (i) the audio content representing speech and (ii) non-speech related audio content.

3. The method of claim 1, wherein replacing one or more words of the generated speech text with one or more corresponding replacement words, thereby generating modified speech text comprises:
determining (502) user profile data associated with a viewer of the media content; and
using (504) at least the one or more words of the generated speech text and the determined user profile data as a basis to select the one or more replacement words.

4. The method of claim 3, wherein the user profile data specifies age-related information about the viewer.

5. The method of claim 3, wherein using at least the one or more words of the generated speech text and the determined user profile data as a basis to select the one or more replacement words comprises using mapping data to map at least the one or more words of the generated speech text and the determined user profile data to the one or more replacement words.

6. The method of claim 3, wherein using at least the one or more words of the generated speech text and the determined user profile data as a basis to select the one or more replacement words comprises using a trained model to map at least the one or more words of the generated speech text and the determined user profile data to the one or more replacement words.

7. The method of claim 1, wherein using at least the one or more words of the generated speech text and the determined speaker's speaking duration of the one or more words of the generated speech text as a basis to select the one or more replacement words comprises using mapping data to map at least the one or more words of the generated speech text and the determined speaker's speaking duration of the one or more words of the generated speech text.

8. The method of claim 1, wherein using at least the one or more words of the generated speech text and the determined speaker's speaking duration of the one or more words of the generated speech text as a basis to select the one or more replacement words comprises using a trained model to map at least the one or more words of the generated speech text and the determined speaker's speaking duration of the one or more words of the generated speech text.

9. The method of claim 1, wherein outputting for presentation, the generated modified media content comprises transmitting to a presentation device (108), media data representing the generated modified media content for display by the presentation device.

10. The method of claim 9, wherein the presentation device is a television.

11. The method of claim 1, wherein outputting for presentation, the generated modified media content comprises displaying the generated modified media content.

12. The method of claim 11, wherein displaying the generated modified media content comprises a television displaying the generated modified media content.

13. A computing system (200) configured for performing a set of acts comprising:
obtaining (402) media content;
extracting (404) from the obtained media content, audio content representing speech, wherein the speech is speech of a speaker;
using (406) the extracted audio content representing speech as a basis to generate corresponding speech text;
replacing (408) one or more words of the generated speech text with one or more corresponding replacement words, thereby generating modified speech text, wherein replacing one or more words of the generated speech text with one or more corresponding replacement words, thereby generating modified speech text comprises: (i) determining the speaker's speaking duration of the one or more words of the generated speech text; and (ii) using at least the one or more words of the generated speech text and the determined speaker's speaking duration of the one or more words of the generated speech text as a basis to select the one or more replacement words;
using the modified speech text as a basis to generate corresponding replacement audio content representing the modified speech;
in the obtained media content, replacing (410) the audio content representing speech with the generated replacement audio content representing speech, thereby generating modified media content; and
outputting (412) for presentation the generated modified media content.

14. A non-transitory computer-readable medium having stored thereon program instructions that upon execution by a computing system, cause performance of a set of acts comprising:
obtaining (402) media content;
extracting (404) from the obtained media content, audio content representing speech, wherein the speech is speech of a speaker;
using (406) the extracted audio content representing speech as a basis to generate corresponding speech text;
replacing (408) one or more words of the generated speech text with one or more corresponding replacement words, thereby generating modified speech text, wherein replacing one or more words of the generated speech text with one or more corresponding replacement words, thereby generating modified speech text comprises: (i) determining the speaker's speaking duration of the one or more words of the generated speech text; and (ii) using at least the one or more words of the generated speech text and the determined speaker's speaking duration of the one or more words of the generated speech text as a basis to select the one or more replacement words;
using the modified speech text as a basis to generate corresponding replacement audio content representing the modified speech;
in the obtained media content, replacing (410) the audio content representing speech with the generated replacement audio content representing speech, thereby generating modified media content; and
outputting (412) for presentation the generated modified media content.

## Patentansprüche

1. Verfahren, umfassend:
Erhalten (402) von Medieninhalt;
Extrahieren (404) von Audioinhalt, der Sprache darstellt, aus dem erhaltenen Medieninhalt, wobei die Sprache Sprache eines Sprechers ist;
Verwenden (406) des extrahierten Audioinhalts, der Sprache darstellt, als eine Grundlage, um entsprechenden Sprachtext zu erzeugen;
Ersetzen (408) von einem oder mehreren Wörtern des erzeugten Sprachtextes durch ein oder mehrere entsprechende Ersatzwörter, wodurch modifizierter Sprachtext erzeugt wird, wobei ein oder mehrere Wörter des erzeugten Sprachtextes durch ein oder mehrere entsprechende Ersatzwörter ersetzt werden, wodurch modifizierter Sprachtext erzeugt wird, der Folgendes umfasst: (i) Bestimmen der Sprechdauer des Sprechers von dem einen oder den mehreren Wörtern des erzeugten Sprachtextes; und (ii) Verwenden von zumindest dem einen oder den mehreren Wörtern des erzeugten Sprachtextes und der bestimmten Sprechdauer des Sprechers des einen oder der mehreren Wörter des erzeugten Sprachtextes als eine Grundlage, um das eine oder die mehreren Ersatzwörter auszuwählen;
Verwenden des modifizierten Sprachtextes als eine Grundlage, um entsprechenden Ersatzaudioinhalt zu erzeugen, der die modifizierte Sprache darstellt;
in dem erhaltenen Medieninhalt Ersetzen (410) des Audioinhalts, der Sprache darstellt, durch den erzeugten Ersatzaudioinhalt, der Sprache darstellt, wodurch modifizierter Medieninhalt erzeugt wird; und
Ausgeben (412) zur Darstellung des erzeugten modifizierten Medieninhalts.

2. Verfahren nach Anspruch 1, wobei der Medieninhalt (i) eine Videoinhaltskomponente und (ii) eine Audioinhaltskomponente einschließt und wobei die Audioinhaltskomponente (i) den Audioinhalt, der Sprache darstellt, und (ii) nicht sprachbezogenen Audioinhalt einschließt.

3. Verfahren nach Anspruch 1, wobei das Ersetzen von einem oder mehreren Wörtern des erzeugten Sprachtextes durch ein oder mehrere entsprechende Ersatzwörter, wodurch modifizierter Sprachtext erzeugt wird, Folgendes umfasst:
Bestimmen (502) von Benutzerprofildaten, die mit einem Betrachter des Medieninhalts assoziiert sind; und
Verwenden (504) von zumindest dem einen oder den mehreren Wörtern des erzeugten Sprachtextes und den bestimmten Benutzerprofildaten als eine Grundlage, um das eine oder die mehreren Ersatzwörter auszuwählen.

4. Verfahren nach Anspruch 3, wobei die Benutzerprofildaten altersbezogene Informationen über den Betrachter spezifizieren.

5. Verfahren nach Anspruch 3, wobei Verwenden von zumindest dem einen oder den mehreren Wörtern des erzeugten Sprachtextes und den bestimmten Benutzerprofildaten als eine Grundlage, um das eine oder die mehreren Ersatzwörter auszuwählen, Verwenden von Zuordnungsdaten umfasst, um zumindest das eine oder die mehreren Wörter des erzeugten Sprachtextes und die bestimmten Benutzerprofildaten dem einen oder den mehreren Ersatzwörtern zuzuordnen.

6. Verfahren nach Anspruch 3, wobei Verwenden von zumindest dem einen oder den mehreren Wörtern des erzeugten Sprachtextes und den bestimmten Benutzerprofildaten als eine Grundlage, um das eine oder die mehreren Ersatzwörter auszuwählen, Verwenden eines trainierten Modells umfasst, um zumindest das eine oder die mehreren Wörter des erzeugten Sprachtextes und die bestimmten Benutzerprofildaten dem einen oder den mehreren Ersatzwörtern zuzuordnen.

7. Verfahren nach Anspruch 1, wobei Verwenden von zumindest dem einen oder den mehreren Wörtern des erzeugten Sprachtextes und der bestimmten Sprechdauer des Sprechers des einen oder der mehreren Wörter des erzeugten Sprachtextes als eine Grundlage, um das eine oder die mehreren Ersatzwörter auszuwählen, Verwenden von Zuordnungsdaten umfasst, um zumindest das eine oder die mehreren Wörter des erzeugten Sprachtextes und die bestimmte Sprechdauer des Sprechers des einen oder der mehreren Wörter des erzeugten Sprachtextes zuzuordnen.

8. Verfahren nach Anspruch 1, wobei Verwenden von zumindest dem einen oder den mehreren Wörtern des erzeugten Sprachtextes und der bestimmten Sprechdauer des Sprechers des einen oder der mehreren Wörter des erzeugten Sprachtextes als eine Grundlage, um das eine oder die mehreren Ersatzwörter auszuwählen, Verwenden eines trainierten Modells umfasst, um zumindest das eine oder die mehreren Wörter des erzeugten Sprachtextes und die bestimmte Sprechdauer des Sprechers des einen oder der mehreren Wörter des erzeugten Sprachtextes zuzuordnen.

9. Verfahren nach Anspruch 1, wobei das Ausgeben zur Präsentation des erzeugten modifizierten Medieninhalts das Übertragen von Mediendaten, die den erzeugten modifizierten Medieninhalt darstellen, zur Anzeige durch die Präsentationseinrichtung an eine Präsentationseinrichtung (108) umfasst.

10. Verfahren nach Anspruch 9, wobei die Präsentationseinrichtung ein Fernseher ist.

11. Verfahren nach Anspruch 1, wobei das Ausgeben zur Präsentation des erzeugten modifizierten Medieninhalts das Anzeigen des erzeugten modifizierten Medieninhalts umfasst.

12. Verfahren nach Anspruch 11, wobei das Anzeigen des erzeugten modifizierten Medieninhalts einen Fernseher umfasst, der den erzeugten modifizierten Medieninhalt anzeigt.

13. Rechensystem (200), das zum Durchführen eines Satzes von Aktionen konfiguriert ist, umfassend:
Erhalten (402) von Medieninhalt;
Extrahieren (404) von Audioinhalt, der Sprache darstellt, aus dem erhaltenen Medieninhalt, wobei die Sprache Sprache eines Sprechers ist;
Verwenden (406) des extrahierten Audioinhalts, der Sprache darstellt, als eine Grundlage, um entsprechenden Sprachtext zu erzeugen;
Ersetzen (408) von einem oder mehreren Wörtern des erzeugten Sprachtextes durch ein oder mehrere entsprechende Ersatzwörter, wodurch modifizierter Sprachtext erzeugt wird, wobei ein oder mehrere Wörter des erzeugten Sprachtextes durch ein oder mehrere entsprechende Ersatzwörter ersetzt werden, wodurch modifizierter Sprachtext erzeugt wird, der Folgendes umfasst: (i) Bestimmen der Sprechdauer des Sprechers von dem einen oder den mehreren Wörtern des erzeugten Sprachtextes; und (ii) Verwenden von zumindest dem einen oder den mehreren Wörtern des erzeugten Sprachtextes und der bestimmten Sprechdauer des Sprechers des einen oder der mehreren Wörter des erzeugten Sprachtextes als eine Grundlage, um das eine oder die mehreren Ersatzwörter auszuwählen;
Verwenden des modifizierten Sprachtextes als eine Grundlage, um entsprechenden Ersatzaudioinhalt zu erzeugen, der die modifizierte Sprache darstellt;
in dem erhaltenen Medieninhalt Ersetzen (410) des Audioinhalts, der Sprache darstellt, durch den erzeugten Ersatzaudioinhalt, der Sprache darstellt, wodurch modifizierter Medieninhalt erzeugt wird; und
Ausgeben (412) zur Darstellung des erzeugten modifizierten Medieninhalts.

14. Nichtflüchtiges computerlesbares Medium mit darauf gespeicherten Programmanweisungen, die bei Ausführung durch ein Computersystem Durchführung eines Satzes von Aktionen bewirken, umfassend:
Erhalten (402) von Medieninhalt;
Extrahieren (404) von Audioinhalt, der Sprache darstellt, aus dem erhaltenen Medieninhalt, wobei die Sprache Sprache eines Sprechers ist;
Verwenden (406) des extrahierten Audioinhalts, der Sprache darstellt, als eine Grundlage, um entsprechenden Sprachtext zu erzeugen;
Ersetzen (408) von einem oder mehreren Wörtern des erzeugten Sprachtextes durch ein oder mehrere entsprechende Ersatzwörter, wodurch modifizierter Sprachtext erzeugt wird, wobei ein oder mehrere Wörter des erzeugten Sprachtextes durch ein oder mehrere entsprechende Ersatzwörter ersetzt werden, wodurch modifizierter Sprachtext erzeugt wird, der Folgendes umfasst: (i) Bestimmen der Sprechdauer des Sprechers von dem einen oder den mehreren Wörtern des erzeugten Sprachtextes; und (ii) Verwenden von zumindest dem einen oder den mehreren Wörtern des erzeugten Sprachtextes und der bestimmten Sprechdauer des Sprechers des einen oder der mehreren Wörter des erzeugten Sprachtextes als eine Grundlage, um das eine oder die mehreren Ersatzwörter auszuwählen;
Verwenden des modifizierten Sprachtextes als eine Grundlage, um entsprechenden Ersatzaudioinhalt zu erzeugen, der die modifizierte Sprache darstellt;
in dem erhaltenen Medieninhalt Ersetzen (410) des Audioinhalts, der Sprache darstellt, durch den erzeugten Ersatzaudioinhalt, der Sprache darstellt, wodurch modifizierter Medieninhalt erzeugt wird; und
Ausgeben (412) zur Darstellung des erzeugten modifizierten Medieninhalts.

## Revendications

1. Procédé comprenant :
l'obtention (402) de contenu multimédia ;
l'extraction (404) à partir du contenu multimédia obtenu, de contenu audio représentant la parole, dans lequel la parole est la parole d'un locuteur ;
l'utilisation (406) du contenu audio extrait représentant la parole comme base pour générer un texte vocal correspondant ;
le remplacement (408) d'un ou plusieurs mots du texte vocal généré par un ou plusieurs mots de remplacement correspondants, générant ainsi un texte vocal modifié, dans lequel le remplacement d'un ou plusieurs mots du texte vocal généré par un ou plusieurs mots de remplacement correspondants, générant ainsi un texte vocal modifié comprend : (i) la détermination de la durée de prononciation de l'un ou plusieurs mots du texte vocal généré par le locuteur ; et (ii) l'utilisation d'au moins l'un ou plusieurs mots du texte vocal généré et de la durée déterminée de prononciation de l'un ou plusieurs mots du texte vocal généré par le locuteur comme base pour sélectionner l'un ou plusieurs mots de remplacement ;
l'utilisation du texte vocal modifié en tant que base pour générer un contenu audio de remplacement correspondant représentant la parole modifiée ;
dans le contenu multimédia obtenu, le remplacement (410) du contenu audio représentant la parole par le contenu audio de remplacement généré représentant la parole, générant ainsi un contenu multimédia modifié ; et
la sortie (412) pour présentation du contenu multimédia modifié généré.

2. Procédé selon la revendication 1, dans lequel le contenu multimédia comprend (i) un composant de contenu vidéo et (ii) un composant de contenu audio, et dans lequel le composant de contenu audio comprend (i) le contenu audio représentant la parole et (ii) un contenu audio non vocal.

3. Procédé selon la revendication 1, dans lequel le remplacement d'un ou plusieurs mots du texte vocal généré par un ou plusieurs mots de remplacement correspondants, générant ainsi un texte vocal modifié, comprenant :
la détermination (502) de données de profil d'utilisateur associées à un spectateur du contenu multimédia ; et
l'utilisation (504) d'au moins l'un ou plusieurs mots du texte vocal généré et des données de profil utilisateur déterminées comme base pour sélectionner l'un ou plusieurs mots de remplacement.

4. Procédé selon la revendication 3, dans lequel les données de profil utilisateur spécifient des informations liées à l'âge concernant le spectateur.

5. Procédé selon la revendication 3, dans lequel l'utilisation d'au moins l'un ou plusieurs mots du texte vocal généré et des données de profil utilisateur déterminées comme base pour sélectionner l'un ou plusieurs mots de remplacement comprend l'utilisation de données de correspondance pour mettre en correspondance au moins l'un ou plusieurs mots du texte vocal généré et les données de profil utilisateur déterminées avec l'un ou plusieurs mots de remplacement.

6. Procédé selon la revendication 3, dans lequel l'utilisation d'au moins l'un ou plusieurs mots du texte vocal généré et des données de profil utilisateur déterminées comme base pour sélectionner l'un ou plusieurs mots de remplacement comprend l'utilisation d'un modèle entraîné pour mettre en correspondance au moins l'un ou plusieurs mots du texte vocal généré et les données de profil utilisateur déterminées avec l'un ou plusieurs mots de remplacement.

7. Procédé selon la revendication 1, dans lequel l'utilisation d'au moins l'un ou plusieurs mots du texte vocal généré et de la durée déterminée de prononciation de l'un ou plusieurs mots du texte vocal généré par le locuteur comme base pour sélectionner l'un ou plusieurs mots de remplacement comprend l'utilisation de données de correspondance pour mettre en correspondance au moins l'un ou plusieurs mots du texte vocal généré et la durée déterminée de prononciation de l'un ou plusieurs mots du texte vocal généré par le locuteur.

8. Procédé selon la revendication 1, dans lequel l'utilisation d'au moins l'un ou plusieurs mots du texte vocal généré et de la durée déterminée de prononciation de l'un ou plusieurs mots du texte vocal généré par le locuteur comme base pour sélectionner l'un ou plusieurs mots de remplacement comprend l'utilisation d'un modèle entraîné pour mettre en correspondance au moins l'un ou plusieurs mots du texte vocal généré et la durée déterminée de prononciation de l'un ou plusieurs mots du texte vocal généré par le locuteur.

9. Procédé selon la revendication 1, dans lequel la sortie pour présentation, du contenu multimédia modifié généré comprend la transmission à un dispositif de présentation (108), de données multimédia représentant le contenu multimédia modifié généré pour affichage par le dispositif de présentation.

10. Procédé selon la revendication 9, dans lequel le dispositif de présentation est une télévision.

11. Procédé selon la revendication 1, dans lequel la sortie pour présentation, du contenu multimédia modifié généré comprend l'affichage du contenu multimédia modifié généré.

12. Procédé selon la revendication 11, dans lequel l'affichage du contenu multimédia modifié généré comprend une télévision affichant le contenu multimédia modifié généré.

13. Système informatique (200) configuré pour effectuer un ensemble d'actes comprenant :
l'obtention (402) de contenu multimédia ;
l'extraction (404) à partir du contenu multimédia obtenu, de contenu audio représentant la parole, dans lequel la parole est la parole d'un locuteur ;
l'utilisation (406) du contenu audio extrait représentant la parole comme base pour générer un texte vocal correspondant ;
le remplacement (408) d'un ou plusieurs mots du texte vocal généré par un ou plusieurs mots de remplacement correspondants, générant ainsi un texte vocal modifié, dans lequel le remplacement d'un ou plusieurs mots du texte vocal généré par un ou plusieurs mots de remplacement correspondants, générant ainsi un texte vocal modifié comprend : (i) la détermination de la durée de prononciation de l'un ou plusieurs mots du texte vocal généré par le locuteur ; et (ii) l'utilisation d'au moins l'un ou plusieurs mots du texte vocal généré et de la durée déterminée de prononciation de l'un ou plusieurs mots du texte vocal généré par le locuteur comme base pour sélectionner l'un ou plusieurs mots de remplacement ;
l'utilisation du texte vocal modifié comme base pour générer un contenu audio de remplacement correspondant représentant la parole modifiée ;
dans le contenu multimédia obtenu, le remplacement (410) du contenu audio représentant la parole par le contenu audio de remplacement généré représentant la parole, générant ainsi un contenu multimédia modifié ; et
la sortie (412) pour présentation du contenu multimédia modifié généré.

14. Support non transitoire lisible par ordinateur sur lequel sont stockées des instructions de programme qui, lors de l'exécution par un système informatique, entraînent la réalisation d'un ensemble d'actes comprenant :
l'obtention (402) de contenu multimédia ;
l'extraction (404) à partir du contenu multimédia obtenu, de contenu audio représentant la parole, dans lequel la parole est la parole d'un locuteur ;
l'utilisation (406) du contenu audio extrait représentant la parole comme base pour générer un texte vocal correspondant ;
le remplacement (408) d'un ou plusieurs mots du texte vocal généré par un ou plusieurs mots de remplacement correspondants, générant ainsi un texte vocal modifié, dans lequel le remplacement d'un ou plusieurs mots du texte vocal généré par un ou plusieurs mots de remplacement correspondants, générant ainsi un texte vocal modifié comprend : (i) la détermination de la durée de prononciation de l'un ou plusieurs mots du texte vocal généré par le locuteur ; et (ii) l'utilisation d'au moins l'un ou plusieurs mots du texte vocal généré et de la durée déterminée de prononciation de l'un ou plusieurs mots du texte vocal généré par le locuteur comme base pour sélectionner l'un ou plusieurs mots de remplacement ;
l'utilisation du texte vocal modifié comme base pour générer un contenu audio de remplacement correspondant représentant la parole modifiée ;
dans le contenu multimédia obtenu, le remplacement (410) du contenu audio représentant la parole par le contenu audio de remplacement généré représentant la parole, générant ainsi un contenu multimédia modifié ; et
la sortie (412) pour présentation du contenu multimédia modifié généré.
